# EUROPEAN PATENT APPLICATION

(11) **EP 3 614 294 A1**
(43) Date of publication of application: **26.02.2020**
(21) Application number: 18788522.3
(22) Date of filing: 15.01.2018
(51) Int. Cl.: G06F 21/84, G06F 21/31, G06F 21/35

(54) **COMPUTER LOCK SYSTEM**

(30) Priority: 19.04.2017 JP 2017083191
(71) Applicant: Ishihara, Kenichi, Fujisawa-shi, Kanagawa 2510027 (JP)
(72) Inventor: Ishihara, Kenichi, Fujisawa-shi, Kanagawa 2510027 (JP)
(74) Representative: Osha Liang
(86) International application number: PCT/JP2018/000880
(87) International publication number: WO 2018/193673

(57) **Abstract**

The invention provides a computer lock system comprising a computer body; and a reception antenna device externally connected to the computer body, wherein the reception antenna device comprises an antenna signal reception unit and an antenna signal output unit, and the computer body includes: a determination unit for intermittently determining whether an acquisition unit signal from an antenna signal acquisition unit includes a lock release ID; an availability status information holding unit for holding availability status information indicating whether a display interface of the computer body determined on the basis of the acquisition unit signal is to be brought into a normally available state; an availability-enabling unit; an availability-disabling unit; and a control unit for controlling the display interface on the basis of the availability status information.

## Description

### Field of the Invention

The present invention relates to a computer lock system and, in particular, to a computer lock system that comprises a computer body and a receiver externally connected to the computer body.

### Background Art

### <Conventional Art>

There are conventionally known methods or apparatuses for controlling processing devices that disable data input from keyboards or mice when specific users leave or move away from their seats partway through working on computers. Japanese Patent Publication No. 2001-268655 (Patent Document 1) may be provided as an example of this, and Patent Document 1 discloses a configuration that includes a computer with an antenna, a personal digital assistant (PDA), a mouse and the like, and in which communication with the PDA is established via the antenna connected to a near-field communication interface embedded in the computer. When a specific user moves away from the computer while holding the PDA and the communication is therefore rendered unavailable, data input from a keyboard, a mouse or the like is disabled. When the specific user returns to his/her seat while holding the PDA, the disabling is automatically cancelled and the computer is restored to the usable state.

Japanese Patent Publication No. 2000-222059 (Patent Document 2) may be provided as another example, and Patent Document 2 discloses an information processing device configured by a portable wireless tag (an RFID card, etc.) and a POS body with an antenna and having a configuration that prevents unauthorized operations by prohibiting data input when a qualified user moves away from the POS body without performing processing for terminating or suspending operations and by allowing the data input when the user approaches the POS body.

Japanese Patent Publication No. H06-259160 (Patent Document 3) may be provided as a further example, and Patent Document 3 discloses a system in which a receiver that receives individual ID information is built in a computer body and an individual ID can be recognized just by a user holding a transponder that has such individual ID inside approaching the computer body.

### Prior Art References

### Patent Documents

Patent Document 1: Japanese Patent Publication No. 2001-268655
Patent Document 2: Japanese Patent Publication No. 2000-222059
Patent Document 3: Japanese Patent Publication No. H06-259160

### Summary of the Invention

### Problems to be Solved by the Invention

These security systems, however, also have their own weaknesses. For example, when part of a security system is made to freeze without the computer being locked, the computer may be set in such frozen state and may be illegally used despite an appropriate unlock wireless signal not being reached.

Such frozen state may be rendered by, for example, an attack being conducted on programs. In addition thereto, however, it is also possible to disable antenna functions to render the frozen state. For example, antennae may be disconnected. The reason for this is that, if signals from the antennae are lost, there is no way to determine whether the source to transmit appropriate unlock wireless signals is out of communication range or whether it is within the communication range but has lost its wireless function. The reason for this is that, while such determination is made based on the signals from the antennae, the signals from the antennae are no longer received. When such determination can no longer be made, the computer's lock status is fixed and the computer is thus placed in a state in which the computer may be accessed for illegal purposes despite the source actually being out of communication range.

In order to solve the above-described problems, a configuration may be needed in which the critical part of the security system will continue to operate even when part of the security system becomes non-functional.

An object of the present invention is to provide a computer lock system that comprises a computer body and a receiver externally connected to the computer body and that can maintain security even when the receiver is detached.

### Means for Solving the Problems

In order to solve the above-described object, the present invention provides the following computer lock system. Specifically, in a first aspect, a computer lock system comprising a computer body and a receiver externally connected to the computer body is provided. The receiver includes: an antenna signal receiving unit that receives, in a wireless manner, an antenna signal that may include noise and be in a no-signal state; and an antenna signal outputting unit that outputs the received antenna signal to the computer body. The computer body includes: an antenna signal acquisition unit that acquires the antenna signal output from the antenna signal outputting unit; a determination unit that determines, in an intermittent manner, whether an unlock ID, which is an ID for enabling usual access to a display interface of the computer body, is contained in an acquired signal, the acquired signal being either a signal containing the antenna signal from the antenna signal acquisition unit or a signal not containing the antenna signal from the antenna signal acquisition unit; an accessible status information holding unit that holds accessible status information that indicates whether or not the usual access to the display interface of the computer body is enabled, the indication being determined based on the acquired signal; an access-enabling unit that changes, when the determination unit determines that a valid unlock ID is contained, the accessible status information in the accessible status information holding unit to an accessible status for enabling the usual access to the display interface of the computer body; an access-disabling unit that changes, when the determination unit determines that a valid unlock ID is not contained, the accessible status information in the accessible status information holding unit to an inaccessible status for causing the display interface of the computer body to disable the usual access to a display; and a control unit that controls the display interface based on the accessible status information held in the accessible status information holding unit (Claim 1).

In addition to the above-described features, the antenna signal acquisition unit, the determination unit, the accessible status information holding unit, the access-enabling unit, the access-disabling unit and the control unit of the computer body are configured to be operative whenever a computer is in operation (Claim 2).

In addition to the above-described features, the antenna signal receiving unit and the antenna signal outputting unit of the receiver are configured to be operative whenever the receiver is externally connected to the computer body that is in operation (Claim 3).

In addition to the above-described features, the computer body further includes: a screen saver unit that displays and outputs a screen saver screen when no input is made from an interface for a predetermined period of time; and a conflict coordinating unit that gives priority to an operation of the control unit when the operation of the control unit and an operation of the screen saver unit conflict with each other (Claim 4).

In addition to the above-described features, the computer body further includes: a password entry accepting unit that accepts an entry of a password, when the determination unit determines that the valid unlock ID is not contained and when the display interface of the computer body is being disabled of the usual access to the display; a password determination unit that determines whether or not the password is correct; and an accessible status fixing unit that forcibly fixes the accessible status information in the accessible status information holding unit to the accessible status when the password determination unit determines that the password is correct (Claim 5).

In addition to the above-described features, the computer body further includes: an inactivation unit that inactivates, when the accessible status information is fixed to the accessible status by the accessible status fixing unit, functions in order to prevent the display interface of the computer body from disabling the usual access to the display by means of the antenna signal acquisition unit, the determination unit and the access-disabling unit of the computer body (Claim 6).

In addition to the above-described features, the computer body and the receiver externally connected to the computer body are connected to each other via a USB cable, the antenna signal outputting unit of the receiver and the antenna signal acquisition unit of the computer body exchange signals by the USB cable, and the receiver is power-fed through the USB cable (Claim 7).

In addition to the above-described features, the antenna signal receiving unit of the receiver is configured to receive a signal from an RFID without a power supply (Claim 8).

In addition to the above-described features, the computer body includes: a network signal determination unit that determines, in an intermittent manner, whether the unlock ID, which is an ID for enabling the usual access to the display interface of the computer body, is contained in a signal received via a network, the received signal being an acquired signal, the acquired signal being either a signal containing an antenna signal from an antenna signal acquisition unit of a connected computer connected via the network or a signal not containing the antenna signal from the antenna signal acquisition unit; and a network interface signal outputting unit that transmits an interface signal that indicates that the interface of the computer body is in the usual accessible state to the connected computer via the network, when the network signal determination unit determines that the unlock ID is contained (Claim 9).

A computer body including the above-described computer lock system (Claim 10).

As a second aspect of the invention, a method for operating a computer body of a computer lock system comprising the computer body and a receiver externally connected to the computer body is provided. The receiver includes: an antenna signal receiving unit that receives, in a wireless manner, an antenna signal that may include noise and be in a no-signal state; and an antenna signal outputting unit that outputs the received antenna signal to the computer body. The computer body is caused to perform: an antenna signal acquisition step of acquiring the antenna signal output from the antenna signal outputting unit; a determination step of determining, in an intermittent manner, whether an unlock ID, which is an ID for enabling usual access to a display interface of the computer body, is contained in an acquired signal, the acquired signal being either a signal containing the antenna signal from the antenna signal acquisition step or a signal not containing the antenna signal from the antenna signal acquisition step; an accessible status information holding step of holding, at all times, accessible status information that indicates whether or not the usual access to the display interface of the computer body is enabled, the indication being determined based on the acquired signal; an access-enabling step of changing, when the determination step determines that a valid unlock ID is contained, the accessible status information in the accessible status information holding step to an accessible status for enabling the usual access to the display interface of the computer body; an access-disabling step of changing, when the determination step determines that a valid unlock ID is not contained, the accessible status information in the accessible status information holding step to an inaccessible status for causing the display interface of the computer body to disable the usual access to a display; and a controlling step of controlling the display interface based on the accessible status information held in the accessible status information holding step (Claim 11).

As a third aspect of the invention, a program for operating a computer body of a computer lock system comprising the computer body and a receiver externally connected to the computer body is provided. The receiver includes: an antenna signal receiving unit that receives, in a wireless manner, an antenna signal that may include noise and be in a no-signal state; and an antenna signal outputting unit that outputs the received antenna signal to the computer body. The computer body is caused to perform: an antenna signal acquisition step of acquiring the antenna signal output from the antenna signal outputting unit; a determination step of determining, in an intermittent manner, whether an unlock ID, which is an ID for enabling usual access to a display interface of the computer body, is contained in an acquired signal, the acquired signal being either a signal containing the antenna signal from the antenna signal acquisition step or a signal not containing the antenna signal from the antenna signal acquisition step; an accessible status information holding step of holding, at all times, accessible status information that indicates whether or not the usual access to the display interface of the computer body is enabled, the indication being determined based on the acquired signal; an access-enabling step of changing, when the determination step determines that a valid unlock ID is contained, the accessible status information in the accessible status information holding step to an accessible status for enabling the usual access to the display interface of the computer body; an access-disabling step of changing, when the determination step determines that a valid unlock ID is not contained, the accessible status information in the accessible status information holding step to an inaccessible status for causing the display interface of the computer body to disable the usual access to a display; and a controlling step of controlling the display interface based on the accessible status information held in the accessible status information holding step (Claim 12).

### Effect of the Invention

According to the above-described configurations, a computer lock system is provided which comprises a computer body and a receiver externally connected to the computer body and which is capable of maintaining security even when the receiver is detached.

### Brief Description of the Drawings

[Fig. 1] Fig. 1 is a conceptual diagram of a computer lock system according to Embodiment 1.
[Fig. 2] Fig. 2 is a functional block diagram of the computer lock system according to Embodiment 1.
[Fig. 3] Fig. 3 is a diagram for explaining an acquired signal in an antenna signal acquisition unit of a computer body according to Embodiment 1.
[Fig. 4] Fig. 4 is a diagram showing a hardware configuration example of the computer lock system according to Embodiment 1.
[Fig. 5] Fig. 5 is a processing flowchart of the computer lock system according to Embodiment 1.
[Fig. 6] Fig. 6 is a diagram for explaining computer lock systems according to Embodiments 2 and 3.
[Fig. 7] Fig. 7 is a functional block diagram of a computer lock system according to Embodiment 4.
[Fig. 8] Fig. 8 is a diagram for explaining the interface usage when a control unit and a screen saver unit of the computer lock system according to Embodiment 4 are in a state of conflict.
[Fig. 9] Fig. 9 is a diagram showing a hardware configuration example of the computer lock system according to Embodiment 4.
[Fig. 10] Fig. 10 is a processing flowchart of the computer lock system according to Embodiment 4.
[Fig. 11] Fig. 11 is a functional block diagram of a computer lock system according to Embodiment 5.
[Fig. 12] Fig. 12 is a diagram showing a hardware configuration example of the computer lock system according to Embodiment 5.
[Fig. 13] Fig. 13 is a processing flowchart of the computer lock system according to Embodiment 5.
[Fig. 14] Fig. 14 is a functional block diagram of a computer lock system according to Embodiment 6.
[Fig. 15] Fig. 15 is a diagram showing a hardware configuration example of the computer lock system according to Embodiment 6.
[Fig. 16] Fig. 16 is a processing flowchart of the computer lock system according to Embodiment 6.
[Fig. 17] Fig. 17 is a functional block diagram of computer lock systems according to Embodiments 7 and 8.
[Fig. 18] Fig. 18 is a conceptual diagram of a network connection-enabled version of a computer lock system according to Embodiment 9.
[Fig. 19] Fig. 19 is a functional block diagram of the computer lock system according to Embodiment 9.
[Fig. 20] Fig. 20 is a diagram showing a hardware configuration example of the computer lock system according to Embodiment 9.

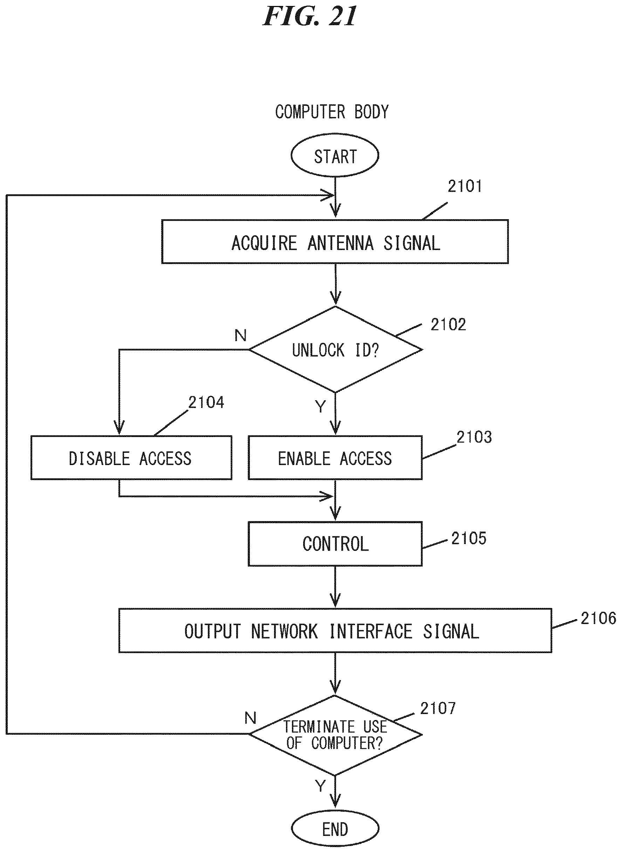

[Fig. 21] Fig. 21 is a processing flowchart of the computer lock system according to Embodiment 9.

- 0100: computer body
- 0101: antenna signal acquisition unit
- 0102: determination unit
- 0103: accessible status information holding unit
- 0104: access-enabling unit
- 0105: access-disabling unit
- 0106: control unit
- 0110: receiver
- 0111: antenna signal receiving unit
- 0112: antenna signal outputting unit
- 0201: CPU
- 0202: non-volatile memory
- 0203: main memory
- 0204: interface
- 0205: display interface
- 0206: keyboard interface
- 0207: network interface
- 0301: antenna signal receiving step
- 0302: antenna signal outputting step
- 0303: antenna signal acquiring step
- 0304: unlock ID determining step
- 0305: access-enabling step
- 0306: access-disabling step
- 0307: controlling step
- 0407: screen saver unit
- 0408: conflict coordinating unit
- 0610: conflict coordinating step
- 0611: screen saver step
- 0707, 1007: password entry accepting unit
- 0708, 1008: password determination unit
- 0709, 1009: accessible status fixing unit
- 0909, 1209: password entry accepting step
- 0910, 1210: password determining step
- 0911, 1211: accessible status information fixing step
- 1010: inactivation unit
- 1212: inactivation step
- 1313: RFID
- 1407: network signal determination unit
- 1408: network interface signal outputting unit
- 1601: network signal determining step
- 1606: network interface signal outputting step

### Embodiments of the Invention

Embodiments of the present invention will hereinafter be described with drawings. It should be noted that the present invention is not limited to any of these embodiments in any way and it may be implemented in various aspects without departing from the scope of the invention.

It should also be noted that the functional blocks of the present system described hereinafter may be implemented as a combination of hardware and software. In particular, if the system utilizes a computer, the functional blocks may include: hardware configuration components such as a central processing unit (CPU), a main memory, a system bus, a secondary storage (e.g., a hard disk drive, a storage medium such as a non-volatile memory, a CD, a DVD, etc., and a read drive for such media), an input device used for inputting information, a display device, an antenna, other external peripheral devices and the like; an interface for such external peripheral devices; a communications interface; an RFID; a driver program for controlling such hardware; other application programs; a user interface application; and the like. Input is made from the input device, other interfaces or the like, data and the like held in the memory or the hard disk are processed or accumulated, and instructions for controlling the above-described hardware and software are generated through arithmetic processing by the CPU in accordance with the programs deployed in the main memory. Alternatively, the functional blocks of the present system may be implemented by dedicated hardware. The present system is not limited to being configured by a single hardware or software component, and it may be configured by a combination of multiple hardware or software components or it may be configured with an inclusion of a server device via a network.

In addition, the present invention can not only be implemented as a system but also as a method. Moreover, part of such invention may be configured as software. Furthermore, it should be understood that a program to be used for causing a computer to execute such software and a recording medium having such program stored therein also fall within the technical scope of the present invention (the same applies throughout this specification).

### <Embodiment 1>

### <Outline>

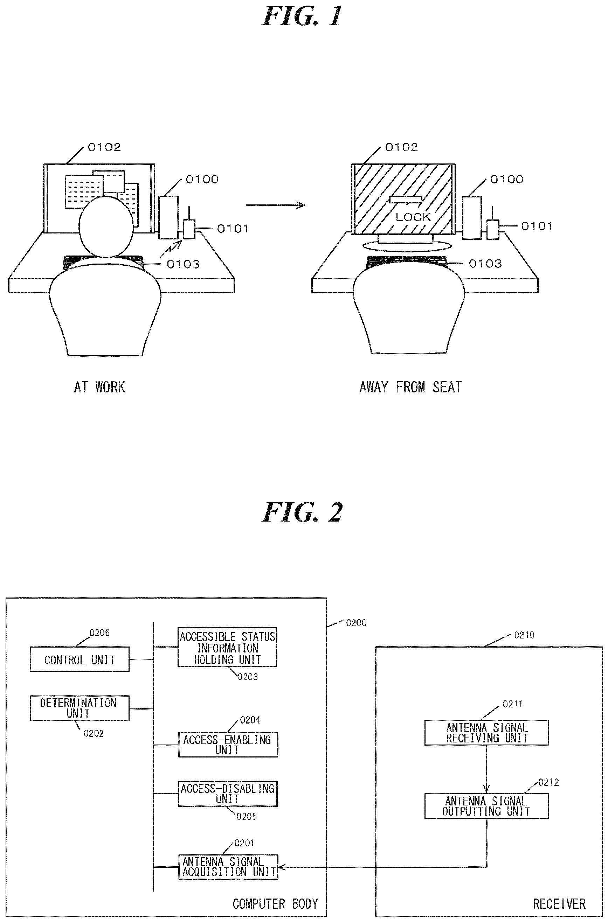

As shown in Fig. 1, the present computer lock system comprises a computer body 0100 and a receiver 0101 externally connected to the computer body 0100. The system is configured to: automatically lock a computer interface (e.g. a display interface) (the right figure in Fig. 1) when, for example, a user logged in and working on the computer (the left figure in Fig. 1) leaves his/her seat; and automatically unlock the computer interface upon receiving an unlock ID contained in an antenna signal from the receiver 0101 when the user returns to and approaches his/her seat. Fig. 1 also shows, as other hardware, a display 0102 and a keyboard 0103 which are used by the user while he/she is working. The display screen in the figure on the left-hand side in Fig. 1 shows a screen when the user is working and the display screen in the figure on the right-hand side in Fig. 1 shows a computer lock screen. For the unlock ID, an RFID without a power supply held by the user may be utilized.

### <Embodiment 1: Configurations>

As shown in Fig. 2, the computer lock system according to Embodiment 1 comprises the computer body 0200 and the receiver 0210. The receiver 0210 comprises an antenna signal receiving unit 0211 and an antenna signal outputting unit 0212. The computer body 0200 includes an antenna signal acquisition unit 0201, a determination unit 0202, an accessible status information holding unit 0203, an access-enabling unit 0204, an access-disabling unit 0205 and a control unit 0206.

### <Embodiment 1: Description of Configurations>

### <Embodiment 1: Receiver>

The receiver 0210 is externally connected to the computer body 0200. A user at his/her desk in his/her office, etc. is logged in and working on the computer (the left figure in Fig. 1). When the user leaves his/her desk (the right figure in Fig. 1) partway through working and moves out of the effective communication range of the receiver, the receiver loses communication with the user who has the unlock ID and thus the computer is automatically locked. Namely, the computer lock screen such as that shown in the figure on the right-hand side in Fig. 1 is displayed when the user is away from his/her desk. When the user then approaches or returns to his/her seat, i.e. when the user enters the effective communication range of the receiver, the receiver receives an antenna signal containing the unlock ID (e.g. incorporated in a card or a wireless tag possessed by the user) possessed by the user, and the receiver then passes on the unlock ID from the received antenna signal to the computer body to unlock the locked computer and release the computer from the inaccessible state. An ID that allows the receiver to be recognized may be output from the antenna signal outputting unit of the receiver with respect to the computer to which the receiver is connected.

### <Embodiment 1: Antenna Signal Receiving Unit>

The antenna signal receiving unit 0211 receives, in a wireless manner, an antenna signal that may contain noise or be in a no-signal state. An RFID without a power supply, near-field communication and the like may be used for the wireless antenna signals. The received antenna signal may contain noise or be in a no-signal state, and the above-described unlock ID and the like are also contained therein.

### <Embodiment 1: Antenna Signal Outputting Unit>

The antenna signal outputting unit 0212 outputs the received antenna signal to the computer body 0200. The output of the antenna signal outputting unit 0212 is input to the antenna signal acquisition unit 0201 of the computer body 0200. The antenna signal may or may not contain the unlock ID. An ID for causing the computer to which the receiver is connected to recognize the receiver may be output from the antenna signal outputting unit.

### <Embodiment 1: Computer Body>

The computer body 0200 corresponds to a computer, a notebook PC, a tablet PC and the like. The display may be separate from or integrated with the computer. In environments such as offices, city halls, public institutions and the like, where multiple users work on a computer, a system is deployed by which the computer is locked, without a user performing any setting, even when the user leaves his/her desk partway through working. The system is capable of unlocking the computer when the user returns to his/her seat and if the unlock ID possessed by the user is contained in the antenna signal transmitted via the receiver 0210 externally connected to the computer body 0200. Here, the effective transmission range (effective communication range) between the receiver externally connected to the computer body and the user (in possession of the unlock ID) is set in the range of one to two meters. It should be noted that it is convenient if the receiver is configured to be able to change the effective transmission range (effective communication range) through operations from the computer body to which the receiver is connected. When the unlock ID is transmitted on the transmitting side, the transmission intensity may be increased or decreased and when the unlock ID is received on the receiving side, the receiving intensity may be adjusted. For example, when the installation interval of the computer is as small as less than one meter, the effective transmission range (effective communication range) may be set to less than one meter.

### <Embodiment 1: Antenna Signal Acquisition Unit>

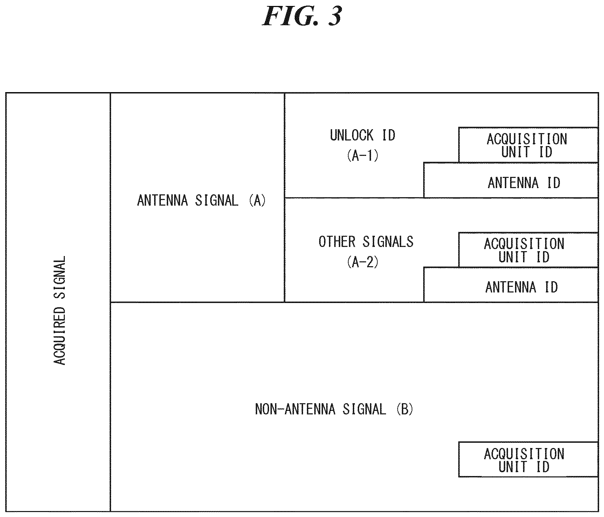

The antenna signal acquisition unit 0201 acquires the antenna signal output from the antenna signal outputting unit 0212. The antenna signal acquisition unit 0201 acquires an antenna signal which is adapted for the receiver and/or a non-adapted antenna signal (non-antenna signal), such as those shown in Fig. 3 described below.

### <Embodiment 1: Determination Unit>

The determination unit 0202 determines, in an intermittent manner, whether the unlock ID, which is an ID for enabling the usual access to the display interface of the computer body 0200, is contained in the acquired signal. The acquired signal is either a signal containing the antenna signal from the antenna signal acquisition unit 0201 or a signal not containing the antenna signal from the antenna signal acquisition unit 0201 (i.e., a non-antenna signal).

As shown in Fig. 3, the above-described acquired signal comprises the antenna signal and/or the non-antenna signal that does not contain the antenna signal. As to the forms of the acquired signal, the acquired signal may contain only the antenna signal (A) or only the non-antenna signal (B). When the acquired signal contains only the antenna signal (A), the acquired signal may further contain only an unlock ID (A-1), or the unlock ID (A-1) and other signals (A-2). When both the antenna signal (A) and the non-antenna signal (B) are contained, the acquired signal may further contain only the unlock ID (A-1), or the unlock ID (A-1) and other signals (A-2).

The unlock ID and the other signals of the antenna signal (A) contain acquisition unit IDs associated with antennae IDs. The non-antenna signal contains an acquisition unit ID without an antenna ID.

Here, the non-antenna signal also contains a noise current that occurs at an outlet for the receiver of the computer body when, for example, the receiver is not connected. Accordingly, even when the acquired signal does not contain the antenna ID and a determination is made that part of the computer lock system is non-functional, the determination unit or the respective units that use the determination result from the determination unit are configured to continue functioning. The other signals in the antenna signal may contain a parameter modifying key for modifying parameters, etc. of the respective units including the determination unit, the accessible status information holding unit, the access-enabling unit, the access-disabling unit, the control unit and the like. It is also possible that the determination unit may further determine whether the parameter modifying key is included, and if it is included, the parameters of the respective units may be modified through the interfaces of the computer body. An example of the parameter of the determination unit may include the unlock ID. Examples of the parameters of the accessible status information holding unit may include the status itself, the effective period of the accessible status, the history accumulation period of the accessible status or the like. An example of the parameters of the access-enabling unit and the access-disabling unit may include, if there are a plurality of accessible status information holding units, deciding which one of the accessible status information holding units is to be in an accessible status or an inaccessible status. The case where there is a plurality of accessible status information holding units refers to the case where there is a plurality of login users registered with the OS (the accessible files, the accessible databases, the accessible external connected devices, the accessible networks and the accessible applications may vary depending on the login users). Under this situation, when the unlock ID for user A is acquired, the login and the usual access to the computer body by user A are enabled; however, this is done such that logins by other users are unaffected. An example of the parameter of the control unit may include selecting the type of display interface to be controlled. For example, if a plurality of displays is connected to a single computer, the display interface may be configured to select either all of the displays being enabled for the usual manipulation or only some of the displays being enabled for the usual manipulation. The display interface may also be configured to be controlled differently depending on the period of time or the time of day.

The determination unit 0202 determines, in an intermittent manner, whether the antenna signal and/or the non-antenna signal are/is contained based on such acquired signal, and thus, even when the receiver externally connected to the computer body is detached, the locking and unlocking of the computer can be performed based on the acquired signals without being affected by the detachment.

For example, if the computer has been locked and the display interface has been rendered inaccessible, when the determination unit 0202 determines that the unlock ID is contained, the access-enabling unit 0204 changes the accessible status information in the accessible status information holding unit 0203 to the accessible status and the control unit 0206 unlocks the computer. When the unlock ID is not contained, the computer continues to be locked. This operation of the determination unit may preferably be performed in an intermittent manner. The intermittent time interval is selected depending on the work content; however, it may be set to any time between a few seconds and a few dozen seconds for usual work. The computer body may be provided with a time interval adjusting unit for adjusting the intermittent time interval.

### <Embodiment 1: Accessible Status Information Holding Unit>

The accessible status information holding unit 0203 holds accessible status information that indicates whether or not the usual access to the display interface of the computer body 0200 is enabled, wherein such indication is determined based on the acquired signal. The state in which the usual access to the display interface is enabled refers to the state in which data input from the keyboard or the mouse connected to the computer body or working instructions by means of a mouse cursor is enabled. In this regard, the cursor movement and key operation for entering a password in the computer lock screen are designed to be enabled even when the computer is locked; however, this state in which the above is enabled is not referred to as the state in which the usual access is enabled.

### <Embodiment 1: Access-Enabling Unit>

When the determination unit 0202 determines that a valid unlock ID is contained, the access-enabling unit 0204 changes the accessible status information in the accessible status information holding unit 0203 to the accessible status for enabling the usual access to the display interface of the computer body 0200.

### <Embodiment 1: Access-Disabling Unit>

When the determination unit 0202 determines that a valid unlock ID is not contained, the access-disabling unit 0205 changes the accessible status information in the accessible status information holding unit 0203 to the inaccessible status for causing the display interface of the computer body 0200 to disable disabling the usual access to the display.

### <Embodiment 1: Control Unit>

The control unit 0206 controls the display interface based on the accessible status information held in the accessible status information holding unit 0203. If the accessible status information indicates the accessible status, the control unit 0206 performs control such that the usual access to the display interface is enabled. When the accessible status information indicates the inaccessible status, the control unit 0206 performs control such that the usual access to the display interface is disabled. The state in which the lock screen configured to accept the entry of a password for unlocking is displayed corresponds to the state in which the usual access to the display interface is disabled, as the display interface only has a password accepting function and the usual work therefore cannot be started immediately. However, the computer lock screen is not limited to the above-described screen, and the screen may be configured so as not to accept any entry of a password. In such case, input from the mouse, the keyboard or the cursor may also be rejected.

In the above-described computer lock system, the receiver 0210 is connected to the computer body 0200 in a detachable manner. Even when the receiver 0210 is detached from the computer body when the computer is locked, the computer body 0200 determines whether the antenna signal and/or the non-antenna signal are/is contained based on the above-described acquired signal, the security can be maintained. In other words, the security may be maintained regardless of whether the receiver is detached or not detached from the computer body.

In addition, use by a third party is also disabled even when the receiver is replaced with another receiver.

### <Embodiment 1: Functions - Hardware Configurations (Computer Body)>

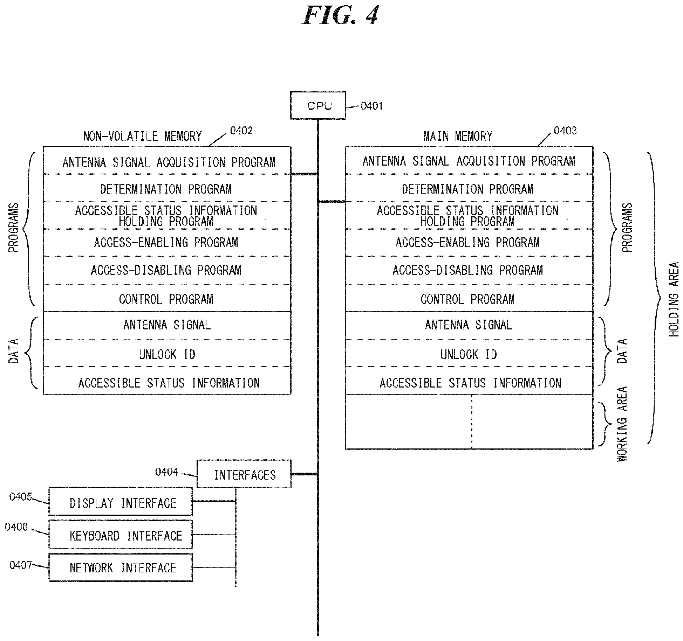

As shown in Fig. 4, the computing section of the computer body is configured by: a CPU 401; a non-volatile memory 0402, such as an HDD, ROM, etc.; a main memory 0403, such as D-RAM, etc.; and an interface 0404. The non-volatile memory 0402 stores therein programs such as an antenna signal acquisition program, a determination program, an accessible status information holding program, an access-enabling program, an access-disabling program, a control program, etc. Data includes the antenna signal, the unlock ID, the accessible status information, etc. These programs and data are loaded to the holding area and executed in the working area of the main memory 0403. The interface 0404 includes a display interface 0405, a keyboard interface 0406, a network interface 0407, etc.

### <Embodiment 1: Processing Flow - Receiver>

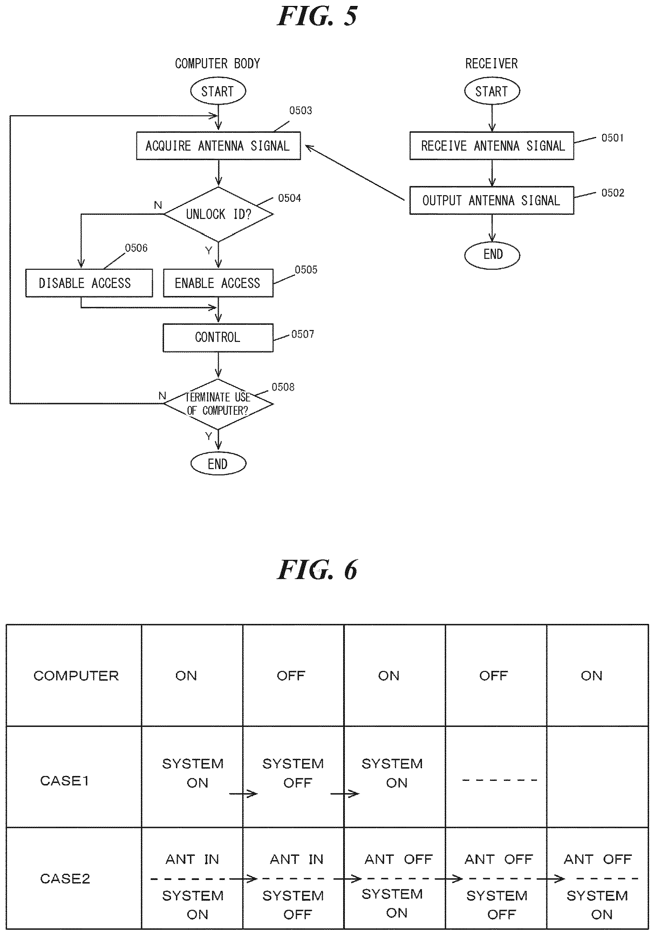

As shown in the figure on the right-hand side in Fig. 5, the receiver performs, by an antenna signal acquisition program, an antenna signal receiving step (step 0501) of receiving, in a wireless manner, the antenna signal that may contain noise or be in a no-signal state. This antenna signal is from, for example, an RFID without a power supply, etc. A determination is made on the computer body side as to whether the unlock ID is contained in the antenna signal.

Next, an antenna signal output program performs an antenna signal outputting step (step 0502) of outputting the received antenna signal to the computer body. By this processing, the antenna signal is input to the computer body to which the receiver is externally connected.

### <Embodiment 1: Processing flow - Computer Body>

As shown in the figure on the left-hand side in Fig. 5, the above-described computing section of the computer body performs, by the antenna signal acquisition program, an antenna signal acquisition step (step 0503) of acquiring the antenna signal output from the antenna signal outputting unit 0212 of the receiver.

Next, the determination program performs a determination step (step 0504) of determining, in an intermittent manner, whether the unlock ID, which is an ID for enabling the usual access to the display interface of the computer body, is contained in an acquired signal, which is either a signal containing the antenna signal from the antenna signal acquisition step 0503 or a signal not containing the antenna signal from the antenna signal acquisition step 0503. Here, the intermittent determination operation interval is set to any time between a few seconds and a few dozen seconds for usual work.

Next, when the determination step 0504 determines that a valid unlock ID is contained, the access-enabling program performs an access-enabling step (step 0505) of changing the accessible status information in the accessible status information holding unit to the accessible status for enabling the usual access to the display interface of the computer body.

Here, at all times, the accessible status information holding program holds the accessible status information that indicates whether or not the usual access to the display interface of the computer body is enabled, wherein such indication is determined based on the acquired signal. The accessible status information is therefore changed to the accessible status by the access-enabling step and held in the accessible status information holding program. Moreover, the unlock ID and the login user information of the corresponding computer body are associated with each other and held in the accessible status information holding program. If there is a plurality of computer bodies, the unlock IDs may be set individually; however, in an environment where a computer body is shared, a single unlock ID may be shared or a plurality of corresponding unlock IDs may be set. Moreover, in offices or public institutions, a separate unlock ID is preferably set in order to render the computer body accessible even when the user in charge of such computer body takes a leave of absence.

Next, when the determination step 0504 determines that a valid unlock ID is not contained, an access-disabling step (0506) is performed so as to change the accessible status information in the accessible status information holding unit to the inaccessible status for causing the display interface of the computer body 0200 to disable the usual access to the display.

Here, if the unlock ID is not contained, when the computer body has been locked, then the computer body continues to be locked and other computers having no correspondence with the computer body can be provided with security measures. Accordingly, the display interface cannot be used without any change. The information on the inaccessible state is held in the accessible status information holding unit.

Next, the control program performs a controlling step (step 0507) of controlling the display interface based on the accessible status information held in the accessible status information holding unit.

If the use of the computer by the user is not terminated (step 0508), the above-described processing is repeated from the antenna signal acquisition step. If the use of the computer is terminated (step 0508), for example, when the computer is turned off, the processing is terminated.

When the computer is turned on again, the computer lock system is activated, and the lock state and the unlock state are automatically controlled based on the unlock ID assigned to the corresponding computer and the user status information without requiring any user operations.

As described above, according to Embodiment 1, a computer lock system is provided which comprises a computer body and a receiver externally connected to the computer body and which is capable of maintaining security even when the receiver is detached.

### <Embodiment 2>

### <Outline>

Embodiment 2 is a computer lock system that is based on Embodiment 1 and that has a feature in part thereof. The feature of Embodiment 2 lies in the point that the antenna signal acquisition unit 0201, the determination unit 0202, the accessible status information holding unit 0203, the access-enabling unit 0204, the access-disabling unit 0205 and the control unit 0206 of the computer body 0200 are configured to be in the operational status whenever the computer body is in operation.

### <Embodiment 2: Configurations>

As shown in Fig. 2, the computer lock system according to Embodiment 2 comprises the computer body 0200 and the receiver 0210. The receiver 0210 comprises the antenna signal receiving unit 0211 and the antenna signal outputting unit 0212. The computer body 0200 includes the antenna signal acquisition unit 0201, the determination unit 0202, the accessible status information holding unit 0203, the access-enabling unit 0204, the access-disabling unit 0205 and the control unit 0206. The antenna signal acquisition unit 0201, the determination unit 0202, the accessible status information holding unit 0203, the access-enabling unit 0204, the access-disabling unit 0205 and the control unit 0206 of the computer body 0200 are configured to be in the operational status whenever the computer is in operation.

### <Embodiment 2: Description of Configurations and Functions>

As shown in Fig. 6, in the example of CASE 1, whenever the computer body is turned on (i.e. the computer is in operation), the computer lock system is also turned on, and the antenna signal acquisition unit 0201, the determination unit 0202, the accessible status information holding unit 0203, the access-enabling unit 0204, the access-disabling unit 0205 and the control unit 0206 of the computer body become operative. For example, when such function of the present computer lock system is implemented by software, the software for the computer lock system is installed as an application and resides in the OS of the computer body. When the computer body is then turned on, the determination unit 0202 makes the determination regarding the acquired signal from the antenna signal acquisition unit 0201 of the computer body and thus the computer lock system operates normally. When the computer body is turned off, the present computer lock system is also turned off. Namely, the antenna signal acquisition unit 0201, the determination unit 0202, the accessible status information holding unit 0203, the access-enabling unit 0204, the access-disabling unit 0205 and the control unit 0206 of the computer body become inoperative. The computer lock system is thus turned on or off in tandem with the computer body being turned on or off.

As shown in Fig. 6, the example of CASE 2 shows the case when the receiver is connected or not connected to the computer body. Whenever the computer body is turned on while the receiver is externally connected to the computer body, the present computer lock system is also turned on. Namely, the antenna signal acquisition unit 0201, the determination unit 0202, the accessible status information holding unit 0203, the access-enabling unit 0204, the access-disabling unit 0205 and the control unit 0206 of the computer body become operative. When the computer body is turned off, the present computer lock system is also turned off even when the receiver is externally connected. Namely, the antenna signal acquisition unit 0201, the determination unit 0202, the accessible status information holding unit 0203, the access-enabling unit 0204, the access-disabling unit 0205 and the control unit 0206 of the computer body become inoperative.

Even when the receiver is turned off (i.e. the receiver is detached), when the computer body is turned on, the present computer lock system is also turned on and becomes operative. Namely, the present computer lock system operates without a booting instruction from the application. When the computer is turned off while the antenna is turned off, the present computer lock system is also turned off and the lock control operation is terminated. The present computer lock system continues to operate even when the antenna is removed while the computer body is turned on.

As described above, according to Embodiment 2, in addition to the advantage of Embodiment 1, the computer lock system is operative whenever the computer is in operation with or without the receiver being externally connected thereto, security can be continuously maintained while the computer is in operation.

### <Embodiment 3>

### <Outline>

Embodiment 3 is a computer lock system that is based on either Embodiment 1 or 2 and that has a feature in part thereof. The feature of Embodiment 3 lies in the point that the receiver is configured to be operative whenever the receiver is externally connected to the computer body that is in operation.

### <Embodiment 3: Configurations>

As shown in Fig. 2, the computer lock system according to Embodiment 3 comprises the computer body 0200 and the receiver 0210. The receiver 0210 comprises the antenna signal receiving unit 0211 and the antenna signal outputting unit 0212. The computer body 0200 includes the antenna signal acquisition unit 0201, the determination unit 0202, the accessible status information holding unit 0203, the access-enabling unit 0204, the access-disabling unit 0205 and the control unit 0206. The antenna signal receiving unit 0211 and the antenna signal outputting unit 0212 of the receiver 0210 are configured to be operative whenever the receiver 0210 is externally connected to the computer body 0200 that is in operation.

### <Embodiment 3: Description of Configurations and Functions>

The configurations and functions of Embodiment 3 are described in detail in the description of CASE 2 of Embodiment 2 in Fig. 6 and the description thereof will therefore be omitted.

In Embodiment 3, the receiver 0210 externally connected to the computer body 0200 is powered from the antenna signal acquisition unit 0201 of the computer body 0200, and thus a switch for turning the receiver off can be dispensed with. Namely, the receiver does not have a function of turning off by itself.

In the above-described example of Embodiment 3, the receiver is configured such that it does not have a power supply; however, if the computer body is a battery-driven notebook computer or a compact tablet computer and the power capacity is insufficient, the receiver may be configured to be supplied from an external power supply or it may contain a battery, a rechargeable secondary battery, such as a lithiumion battery, a nickel-hydrogen battery, etc.

As described above, according to Embodiment 3, in addition to the advantage of Embodiment 1 or 2, since the antenna signal receiving unit and the antenna signal outputting unit of the receiver are powered and therefore operative whenever the receiver is connected to the computer body, the locking and unlocking of the computer are performed on a continuous basis.

### <Embodiment 4>

### <Outline>

Embodiment 4 is a computer lock system that is based on Embodiments 1 to 3 and that has a feature in part thereof The feature of Embodiment 4 lies in the point that a function is provided for coordinating conflicts between a screen saver and the computer lock system.

### <Embodiment 4: Configurations>

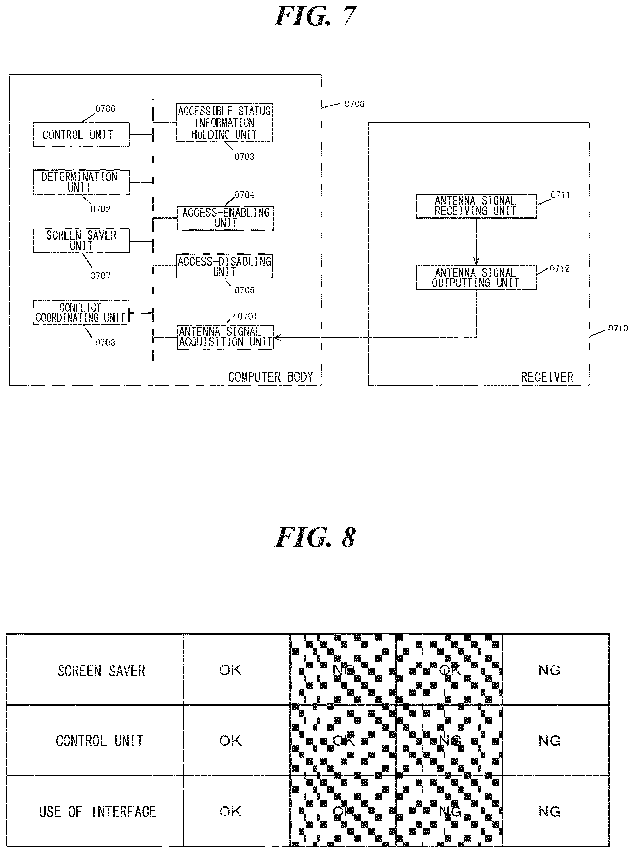

As shown in Fig. 7, the computer lock system according to Embodiment 4 comprises the computer body 0700 and the receiver 0710. The receiver 0710 comprises the antenna signal receiving unit 0711 and the antenna signal outputting unit 0712. The computer body 0700 includes the antenna signal acquisition unit 0701, the determination unit 0702, the accessible status information holding unit 0703, the access-enabling unit 0704, the access-disabling unit 0705 and the control unit 0706, and further includes a screen saver unit 0707 and a conflict coordinating unit 0708.

### <Embodiment 4: Description of Configurations>

### <Embodiment 4: Screen Saver Unit>

The screen saver unit 0707 displays a screen saver screen when no input is made from the interface(s) for a predetermined time period. The interface(s) include(s) a keyboard input, a mouse input and the like. When there is no such input for a predetermined time period, the screen saver screen is output. Typically, the predetermined time period can be set by a user to be any time between a few minutes and a few dozen minutes. It is considered that the predetermined time period is often set to a few minutes or so when the screen saver is used for the locking purpose such that the computer cannot be accessed without permission when, for example, the user is away from his/her desk. For example, if the computer body is installed with a Windows (registered trademark) operating system (OS) (e.g. Windows 10, Windows 8.1, Windows 7, etc.), the settings for the screen saver can be made by displaying the control panel screen and selecting "Personalize" through the desktop customization. If the "On resume, display logon screen" check box is checked on the screen saver screen, the logon screen is displayed and entry of a password is requested when the screen saver is interrupted for performing input operations, etc. (for example, the interruption is triggered by interface input such as moving the mouse or performing key input from the keyboard).

If a no-screen-saver setting is made, no problems occur in the present computer lock system since the screen saver screen will not be displayed. If the above-described "On resume, display logon screen" check box is checked, the conflict between the operation of the control unit 0706 and the operation of the screen saver unit 0707 needs to be taken into consideration since there is a risk of conflict with the present computer lock system.

### <Embodiment 4: Conflict coordinating unit>

The conflict coordinating unit 0708 gives priority to the operation of the control unit 0706 when the operation of the control unit 0706 and the operation of the screen saver unit 0707 conflict with each other. It should be noted that the operation of the screen saver unit includes both the displaying of the screen saver screen and the displaying of the logon screen at the time of resuming work.

As shown in Fig. 8, the use of the interface will be described when the operation of the control unit and the operation of the screen saver unit conflict with each other as described above. The "OK" in the "use of interface" column in Fig. 8 refers to case (1) where a screen saver is not activated and case (2) where a screen saver is activated but entry of a password is not required.

When the screen saver unit operation is "OK" and the control unit operation is "OK," then the "use of interface" is also "OK." Even when the screen saver unit operation is "NG (i.e., the screen saver unit determines that the displaying of the screen saver screen or the displaying of the logon screen should be performed), if the control unit operation is "OK," the "use of interface" is then also "OK" and the control unit operation is given priority. Moreover, even when the screen saver unit operation is "OK" (i.e., the screen saver unit determines that the displaying of the screen saver screen or the displaying of the logon screen should not be performed), if the control unit operation is "NG," the control unit operation is then given priority and the "use of interface" is also "NG." When both the screen saver unit operation and the control unit operation are "NG," then the "use of interface" is also "NG."

The present computer lock system will operate as described above. The other configurations are similar to those of Embodiment 1 in Fig. 2 and the description thereof will therefore be omitted.

### <Embodiment 4: Functions - Hardware Configurations (Computer Body)>

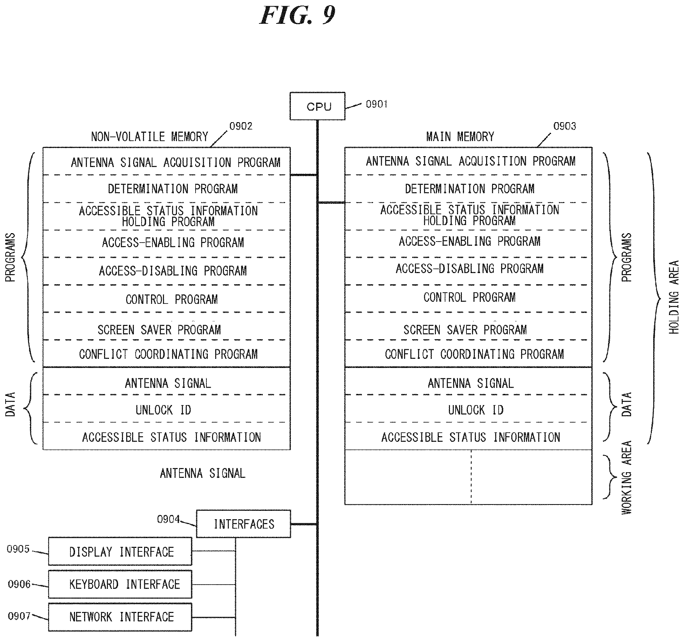

As shown in Fig. 9, the computing section of the computer body is configured by: the CPU 901; the non-volatile memory 0902, such as an HDD, ROM, etc.; the main memory 0903, such as D-RAM, etc.; the interface 0904; the display interface 0905; the keyboard interface 0906 and the network interface 0907. The non-volatile memory 0902 stores therein programs such as a screen saver program, a conflict coordinating program, etc. Data includes the antenna signal, the unlock ID, the accessible status information, etc. These programs and data are loaded to the holding area and executed in the working area of the main memory 0903. The other programs are similarly configured to those of Embodiment 1 in Fig. 4 and the description thereof will therefore be omitted.

### <Embodiment 4: Processing Flow - Receiver>

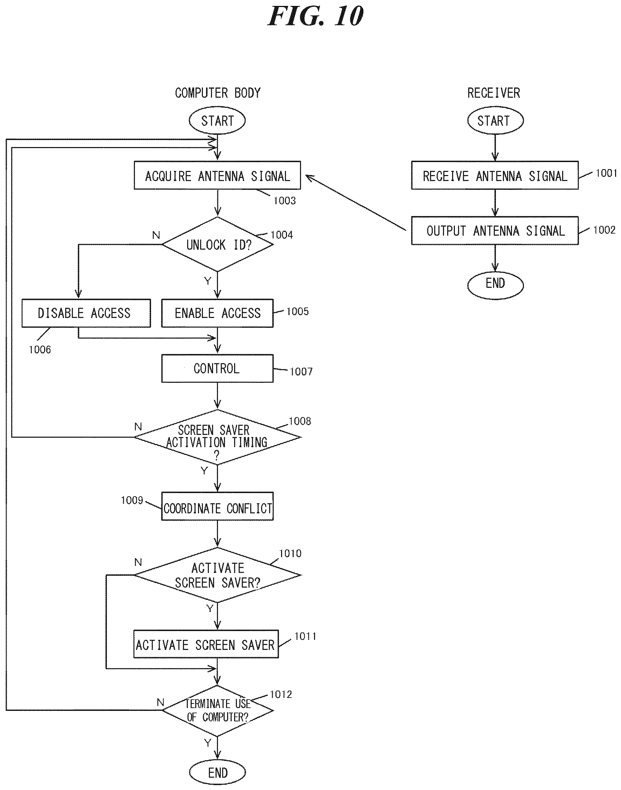

As shown in the figure on the right-hand side in Fig. 10, when the antenna signal receiving step 1001 and the antenna signal outputting step 1002 are performed, the antenna signal from the receiver 0710 is input into the computer body 0700 to which the receiver is externally connected. The processing in the antenna signal receiving step 1001 and the antenna signal outputting step 1003 is similar to that in the antenna signal receiving step 0501 and the antenna signal outputting step 0502 of Embodiment 1 in Fig. 5 and the description thereof will therefore be omitted.

### <Embodiment 4: Processing Flow - Computer Body>

As shown in the figure on the left-hand side in Fig. 10, the above-described computing section of the computer body performs the antenna signal acquiring step 1003, the determining step 1004, the access-enabling step 1005, the access-disabling step 1006 and the controlling step 1007 in order to determine whether or not the acquired signal, such as that shown in Fig. 3, from the antenna signal acquisition unit 0701 contains the unlock ID (step 1004), and the computing section then performs the access-enabling step 1005 or the access-disabling step 1006 in order to cause the accessible status information holding unit 0703 to hold either the accessible status or the inaccessible status as the accessible status information at all times. The processing in the processing steps 1003 to 1007 is similar to that in the processing steps 0503 to 0507 of Embodiment 1 in Fig. 5 and the description thereof will therefore be omitted.

Under the above-described conditions, a screen saver activation timing determining step (step 1008) is performed in order to determine whether it is the timing for activating the screen saver. When it is determined, based on the determination from the screen saver activation timing determining step 1008, that it is the timing for activating the screen saver, the control program operation and the screen saver program operation conflict with each other and a conflict coordinating step (step 1009) that gives priority to the control unit operation is therefore performed. Here, in addition to the timing determined by the screen saver unit that the screen saver should be activated from the state in which the screen saver is not activated, the screen saver activation timing also includes the timing for determining whether the screen saver operation should be continued when such screen saver is already activated. In addition, the activation of the screen saver also includes the displaying of the logon screen, in addition to the displaying of the screen saver.

In response to the coordination result from the conflict coordinating step, a screen saver activation determining step (step 1010) is performed in order to determine whether the screen saver should be activated. If the activation of the screen saver is permitted in the conflict coordinating step, a screen saver step (step 1011) is performed. In the screen saver step, either the screen saver or the logon screen is displayed on a display. If the screen saver is not to be activated, the control unit takes over the control. After the screen saver is activated or the control unit takes over the control, the use termination determining step (step 1012) is performed.

If it is determined, in the use termination determining step, that the use is not terminated, the processing flow returns to the antenna signal acquisition step again. There are two ways of returning: returning to the antenna signal acquisition step with the screen saver being activated; or returning to the antenna signal acquisition step without the screen saver being activated. When the screen saver is activated, this means that the control unit is disabling the usual access to the display interface based on the inaccessible status, which is a status in the accessible status information, and the conflict coordinating step is then repeated, as long as the above-described control state continues, either for keeping the screen saver activated or for changing the control state to the state in which the usual access to the display interface is enabled. When the determination unit determines that the unlock ID is contained in the acquired signal while the screen saver is still activated, the access-enabling unit changes the accessible status information to the accessible status, and accordingly, the conflict coordinating unit performs the conflict coordination in which the control by the control unit is given priority and the usual access to the display interface is enabled even when the screen saver unlock determination is not made at the screen saver unit. As a consequence, the screen saver unit makes a determination of no screen saver activation, i.e., it terminates the screen saver and the usual access to the display is enabled.

The above-described processing is repeated until the user terminates the use of the computer (step 1012).

As described above, according to the present Embodiment 4, in addition to the advantages of Embodiments 1 to 3, since the control by the computer lock system is given priority when, for example, the screen saver of a Windows (registered trademark) computer and the computer lock system conflict with each other, security can be maintained in a user-friendly manner.

### <Embodiment 5>

### <Outline>

Embodiment 5 is a computer lock system that is based on any of Embodiments 1 to 4 and that has a feature in part thereof. The feature of Embodiment 5 lies in the point that, while the usual access to the display interface is disabled (i.e. when the computer is locked), the accessible status information is fixed to the accessible status if the correct password is accepted even when the unlock ID is not contained in the acquired signal.

### <Embodiment 5: Configurations>

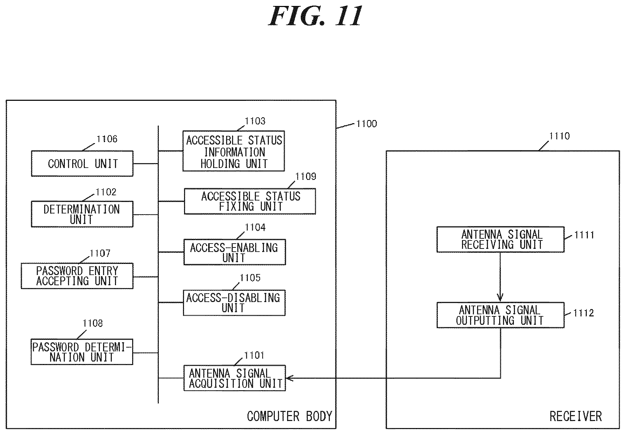

As shown in Fig. 11, the computer lock system according to Embodiment 5 comprises the computer body 1100 and the receiver 1110. The receiver 1110 comprises the antenna signal receiving unit 1111 and the antenna signal outputting unit 1112. The computer body 1100 includes the antenna signal acquisition unit 1101, the determination unit 1102, the accessible status information holding unit 1103, the access-enabling unit 1104, the access-disabling unit 1105 and the control unit 1106, and further includes a password entry accepting unit 1107, a password determination unit 1108 and an accessible status fixing unit 1109.

### <Embodiment 5: Description of Configurations>

### <Embodiment 5: Password Entry Accepting Unit>

The password entry accepting unit 1107 determines whether or not a password entry is accepted when the determination unit 1102 determines that a valid unlock ID is not contained and when the display interface of the computer body 1100 disables the usual access to the display. For example, when a password is entered from the keyboard connected to the computer body or the software keyboard displayed on the touch-sensitive screen of a tablet PC, etc., the processing proceeds to the password determination unit 1108.

### <Embodiment 5: Password Determination Unit>

The password determination unit 1108 determines whether the password is correct. Here, for the computer body implemented by, for example, a Windows (registered trademark) computer, if the password is the same as the password set as the login password for such computer, then it is determined that the password is correct.

### <Embodiment 5: Accessible Status Fixing Unit>

The accessible status fixing unit 1108 forcibly fixes the accessible status information in the accessible status information holding unit 1103 to the accessible status when the password determination unit 1108 determines that the password is correct.

Namely, the present computer lock system fixes the accessible status information in the accessible status information holding unit 1103 to the accessible status from the inaccessible status if the password is correct. The display interface of the computer body is then enabled for usual access. The reason for such configuration is because of the need for emergency measures in the event of failure or loss of the unlock ID source. Accordingly, the password is preferably held in confidence by a person with higher authority, such as a system administrator in the office. Then, if a determination is made in an intermittent manner as to whether the unlock ID is acquired after the computer is unlocked using such password, a problem occurs to the effect that the unlock state can only be maintained for a few seconds and thus the unlocking and working on the computer are rendered substantially unavailable. Accordingly, when the computer is unlocked using a password, the usual processing, such as the determination of having acquired the unlock ID, etc., is suspended and the status of the accessible status information is fixed to the accessible status at all times. The other configurations are similar to those of Embodiment 1 in Fig. 2 and the description thereof will therefore be omitted.

### <Embodiment 5: Functions - Hardware Configurations (Computer Body)>

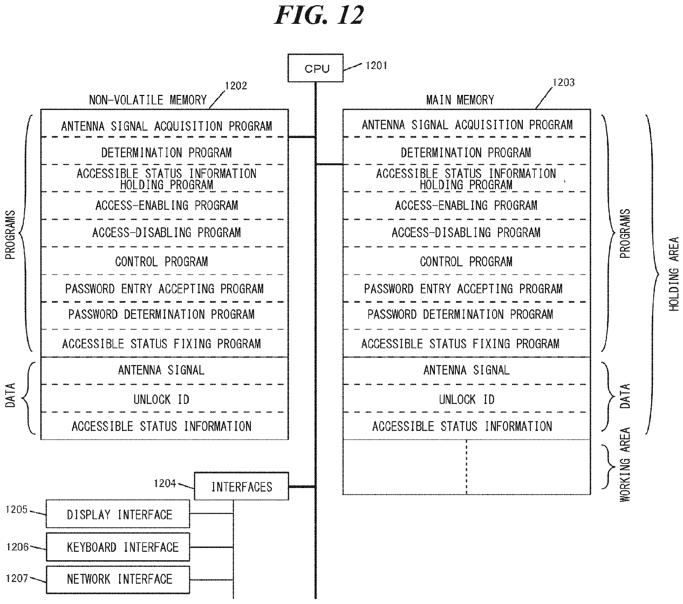

As shown in Fig. 12, the computing section of the computer body is configured by: the CPU 1201; the non-volatile memory 1202, such as an HDD, ROM, etc.; the main memory 1203, such as D-RAM, etc.; the interface 1204; the display interface 1205; the keyboard interface 1206 and the network interface 1207. The non-volatile memory 1202 stores therein programs such as a password entry accepting program, a password determining program, an accessible status fixing program, etc. Data includes the antenna signal, the unlock ID, the accessible status information, etc. These programs and data are loaded to the holding area and executed in the working area of the main memory 1203. The other programs are similarly configured to those of Embodiment 1 in Fig. 4 and the description thereof will therefore be omitted.

### <Embodiment 5: Processing Flow - Receiver>

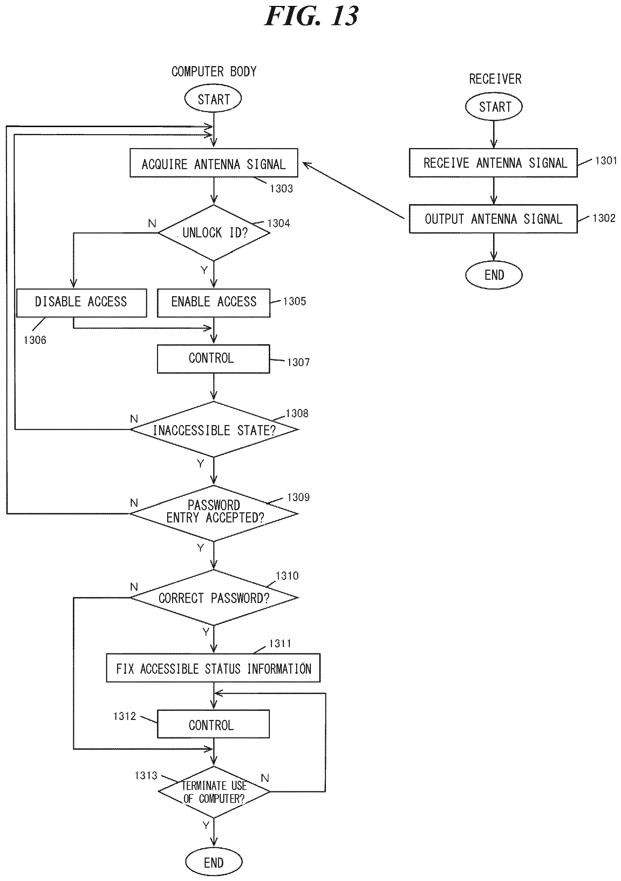

As shown in the figure on the right-hand side in Fig. 13, when the antenna signal receiving step 1301 and the antenna signal outputting step 1302 are performed, the antenna signal from the receiver 1110 is input into the computer body 1100 to which the receiver is externally connected. The processing in the antenna signal receiving step 1301 and the antenna signal outputting step 1302 is similar to that in the antenna signal receiving step 0501 and the antenna signal outputting step 0502 of Embodiment 1 in Fig. 5 and the description thereof will therefore be omitted.

### <Embodiment 5: Processing Flow - Computer Body>

As shown in the figure on the left-hand side in Fig. 13, the above-described computing section of the computer body performs the antenna signal acquiring step 1303, the determining step 1304, the access-enabling step 1305, the access-disabling step 1306 and the controlling step 1307 in order to determine whether or not the acquired signal, such as that shown in Fig. 3, from the antenna signal acquisition unit 1101, contains the unlock ID (step 1304), and the computing section then performs the access-enabling step 1305 or the access-disabling step 1306 in order to cause the accessible status information holding unit 1103 to hold either the accessible status or the inaccessible status as the accessible status information at all times. The processing in the processing steps 1303 to 1307 is similar to that in the processing steps 0503 to 0507 of Embodiment 1 in Fig. 5 and the description thereof will therefore be omitted.

Under the above-described conditions, a determining step (step 1308) is performed in order to determine whether or not the display interface of the computer body is in the inaccessible state in which the usual access to the display is disabled under the lock control by the controlling step 1307. If the display interface is not in the inaccessible state (step 1308), the processing flow returns to the processing in the antenna signal acquiring step 1303.

If the display interface of the computer body is in the state in which the usual access to the display is disabled (i.e. the inaccessible state) (step 1308), the password entry accepting program performs a password entry accepting step (step 1309) in order to determine whether or not a password entry is accepted.

Next, the password determining program performs a password determining step (step 1310) in order to determine whether or not the password is correct.

After that, if the password determining step 1310 determines that the password is correct, the accessible status information fixing program performs an accessible status fixing step (step 1311) in order to forcibly fix the accessible status information in the accessible status information holding unit to the accessible status.

Following this, the control is handed over to the lock control processing by the control program (step 1312). While the control unit performs processing based on the accessible status, the accessible status information is fixed to the accessible status and the computer is therefore controlled so as to be in the accessible state in which the usual access to the display is enabled until the use of the computer is terminated. Further, the computer is preferably configured such that the accessible status information is fixed to the accessible status even when the computer is rebooted after it has been turned off.

Next, a determination is made as to whether or not the use of the computer by the user is terminated (step 1313). If the use is not terminated, the processing flow returns to the controlling step 1312 and the above-described processing is repeated.

If the use of the computer by the user is terminated (step 1313), for example, when the computer is turned off, the computer lock system is terminated.

As described above, according to Embodiment 5, in addition to the advantages of Embodiments 1 to 4, for example, in a Windows (registered trademark) computer, etc., the entry of a password is accepted if such password is correct even when the computer body is locked, and the display interface of the computer body can be changed to the state in which the usual access to the display interface is enabled even when the display interface thereof is originally inaccessible, and this enables a legitimate user of such computer to continue working.

### <Embodiment 6>

### <Outline>

Embodiment 6 is a computer lock system that is based on Embodiment 5 and that has a feature in part thereof. The feature of Embodiment 6 lies in the point that an inactivation unit is provided for inactivating functions when the accessible status is fixed.

### <Embodiment 6: Configurations>

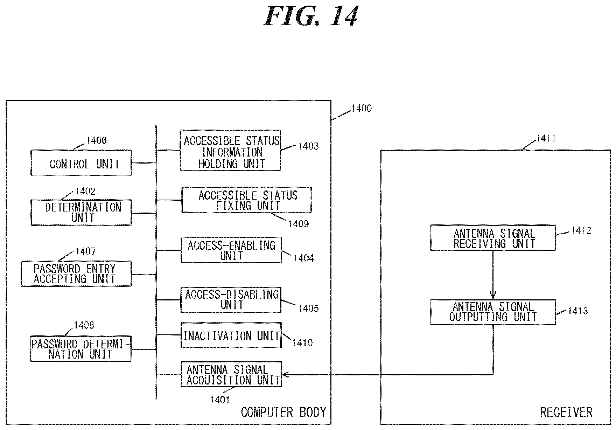

As shown in Fig. 14, the computer lock system according to Embodiment 6 comprises the computer body 1400 and the receiver 1411. The receiver 1411 comprises the antenna signal receiving unit 1412 and the antenna signal outputting unit 1413. The computer body 1400 includes: the antenna signal acquisition unit 1401, the determination unit 1002, the accessible status information holding unit 1003, the access-enabling unit 1004, the access-disabling unit 1405, the control unit 1406, the password entry accepting unit 1407, the password determination unit 1408 and the accessible status fixing unit 1409, and further includes an inactivation unit 1410.

### <Embodiment 6: Description of Configurations>

### <Embodiment 6: Inactivation Unit>

When the accessible status information is fixed to the accessible status by the accessible status fixing unit 1409, the inactivation unit 1410 inactivate the functions of the antenna signal acquisition unit 1401, the determination unit 1402 and the access-disabling unit 1405 of the computer body 1400 in order to prevent the display interface of the computer body 1400 from disabling the usual access to the display by means of such units. Namely, this means that the functions of the computer lock system are suspended.

### <Embodiment 6: Functions - Hardware Configurations (Computer Body)>

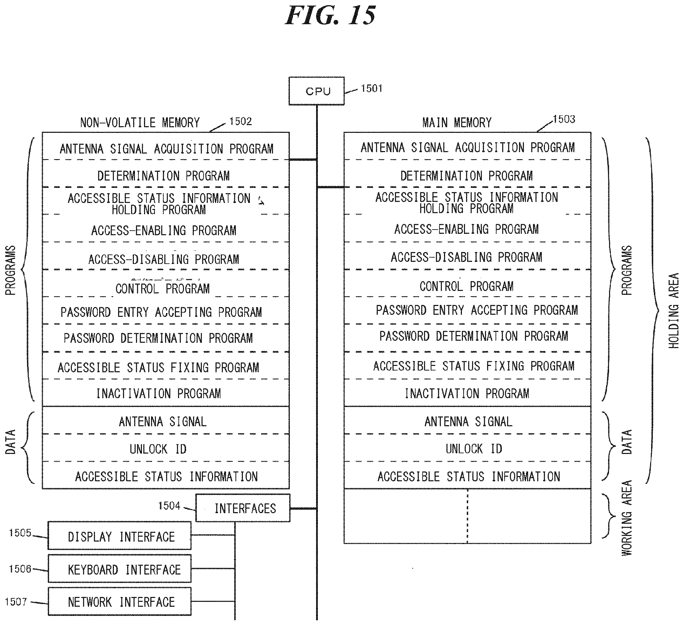

As shown in Fig. 15, the computing section of the computer body is configured by: the CPU 1501; the non-volatile memory 1502, such as an HDD, ROM, etc.; the main memory 1503, such as D-RAM, etc.; the interface 1504; the display interface 1505; the keyboard interface 1506 and the network interface 1507. The non-volatile memory 1502 stores therein programs such as an inactivation program, etc. Data includes the antenna signal, the unlock ID, the accessible status information, etc. These programs and data are loaded to the holding area and executed in the working area of the main memory 1503. The other programs are similarly configured as those of Embodiment 5 in Fig. 12 and the description thereof will therefore be omitted.

### <Embodiment 6: Processing Flow - Receiver>

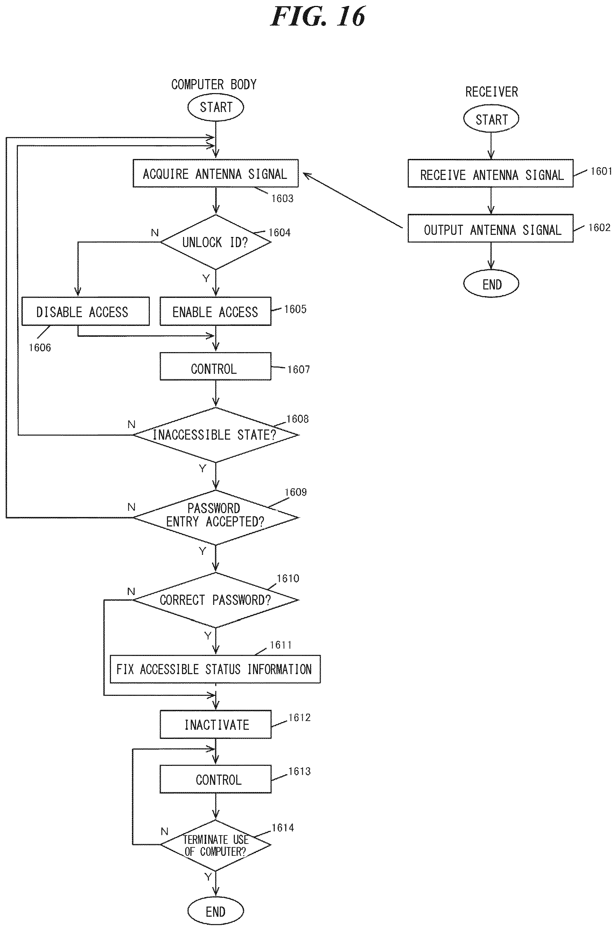

As shown in the figure on the right-hand side in Fig. 16, when the antenna signal receiving step 1601 and the antenna signal outputting step 1602 are performed, the antenna signal from the receiver 1411 is input into the computer body 1400 to which the receiver is externally connected. The processing in the antenna signal receiving step 1401 and the antenna signal outputting step 1402 is similar to that in the antenna signal receiving step 0501 and the antenna signal outputting step 0502 of Embodiment 1 in Fig. 5 and the description thereof will therefore be omitted.

### <Embodiment 6: Processing Flow - Computer Body>

As shown in the figure on the left-hand side in Fig. 16, the above-described computing section of the computer body performs the antenna signal acquiring step 1603, the determining step 1604, the access-enabling step 1605, the access-disabling step 1606 and the controlling step 1607 in order to determine whether or not the acquired signal, such as that shown in Fig. 3, from the antenna signal acquisition unit 1401 contains the unlock ID (step 1604), and the computing section then performs the access-enabling step 1605 or the access-disabling step 1606 in order to cause the accessible status information holding unit 1403 to hold either the accessible status or the inaccessible status as the accessible status information at all times. The processing in the processing steps 1603 to 1607 is similar to that in the processing steps 0503 to 0507 of Embodiment 1 in Fig. 5 and the description thereof will therefore be omitted.

Under the above-described conditions, the determining step (step 1608) is performed in order to determine whether or not the display interface of the computer body is in the inaccessible state in which the usual access to the display is disabled under the lock control by the controlling step 1607. If the display interface is not in the inaccessible state (step 1608), the processing flow returns to the antenna signal acquiring step 1603.

If the display interface of the computer body is in the state in which the usual access to the display is disabled (i.e. the inaccessible state) (step 1608), the password entry accepting program performs a password entry acceptance determining step (step 1609) in order to determine whether or not to accept a password entry.

In the password entry acceptance determining step 1609, if the password entry is accepted, the password determining program then performs a password determining step (step 1610) in order to determine whether or not the password is correct.

Next, if the password determining step 1610 determines that the password is correct, the accessible status information fixing program performs an accessible status fixing step (step 1611) in order to forcibly fix the accessible status information in the accessible status information holding unit to the accessible status.

If it is determined that the password entry is not accepted in the above-described password entry acceptance determining step 1609, the processing flow returns to the antenna signal acquiring step 1603.

Next, when the inactivation program causes the accessible status fixing unit 1409 to fix the accessible status information to the accessible status, the functions of the antenna signal acquisition unit 1401, the determination unit 1402 and the access-disabling unit 1405 of the computer body 1400 are inactivated so as to prevent the display interface of the computer body 1400 from disabling the usual access to the display by means of such units (step 1612). Namely, this means that the functions of the computer lock system are suspended.

After that, the control is handed over to the lock control processing by the control program (step 1613). While the control program performs control based on the accessible status information, the control is fixed to the accessible state since the accessible status information is fixed to the accessible status.

Following this, a determination is made as to whether or not the use of the computer by the user is terminated (step 1614). If the use is not terminated, the processing flow returns to the controlling step 1613 and the above-described processing is repeated.

If the use of the computer by the user is terminated (step 1614), for example, when the computer is turned off, the computer lock system is terminated. However, when the computer body is turned on again to reboot the same after it has been turned off, if may be inconvenient if the lock system is activated again, and it is therefore preferable for the inactivation state and the fixation of the accessible status information to be reproduced even after the rebooting.

### <Embodiment 7>

### <Outline>

Embodiment 7 is a computer lock system that is based on any of Embodiments 1 to 6 and that has a feature in part thereof. The feature of Embodiment 7 lies in the points that the computer body and the receiver externally connected to the computer body are connected to each other via a USB cable and the power is fed from the computer body to the receiver.

### <Embodiment 7: Configurations>

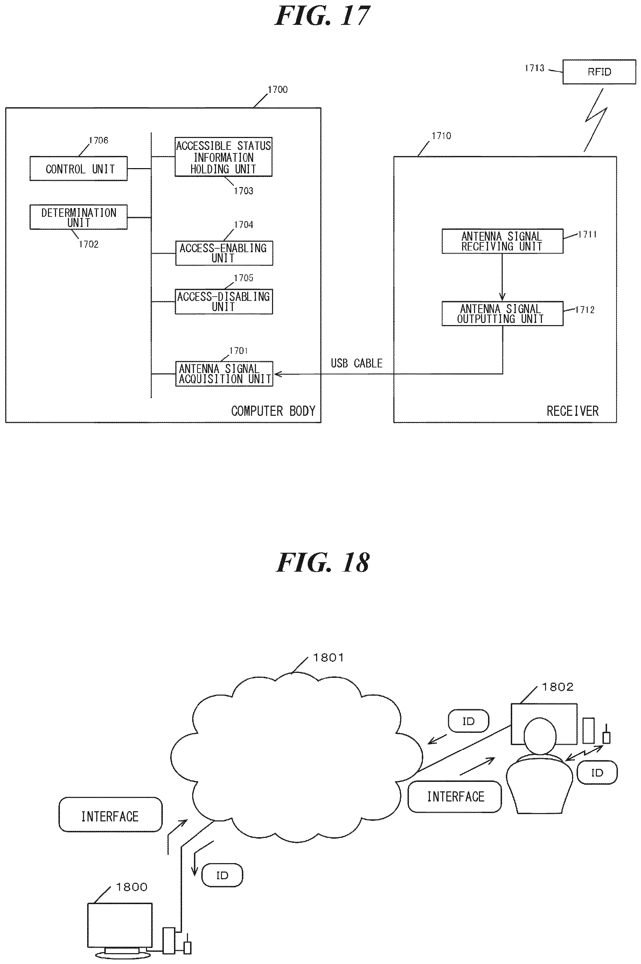

As shown in Fig. 17, the computer lock system according to Embodiment 7 comprises the computer body 1700 and the receiver 1710. The receiver 1710 comprises the antenna signal receiving unit 1711 and the antenna signal outputting unit 1713. The computer body 1700 includes the antenna signal acquisition unit 1701, the determination unit 1702, the accessible status information holding unit 1703, the access-enabling unit 1704, the access-disabling unit 1705 and the control unit 1706. The computer body 1700 and the receiver 1710 externally connected to the computer body 1700 are connected to each other via a USB cable (an interface cable).

### <Embodiment 7: Description of Configurations>

### <Embodiment 7: Power Supplying Through USB Cable Connection>

The computer body 1700 and the receiver 1710 externally connected to the computer body 1700 are connected to each other via a USB cable. The antenna signal outputting unit 1712 of the receiver 1710 and the antenna signal acquisition unit 1701 of the computer body 1700 exchange signals by this USB cable and the receiver 1710 is power-fed through this USB cable.

Here, the antenna signal acquisition unit 1701 of the computer body 1700 and the antenna signal outputting unit 1712 of the receiver 1710 are both provided with a USB interface circuit with a USB connector (not shown) and they can perform device recognition through Plug-and-Play by connecting the USB cable. Namely, the antenna signal acquisition unit 1701 may acquire its own ID information, the antenna signal, etc. from the antenna signal outputting unit 1712 of the receiver 1710. Any USB connectors, such as a USB Type-A, Type-B, Type-C, mini-B, micro-B, etc., may be used. USB interfaces, such as USB 2.0, USB 3.0, USB 3.1 interfaces, etc., may be used. A power supplying capacity of: 5 V, 500 mA for USB 2.0; 5 V, 900 mA for USB 3.0; and 5 V, 1000 mA for USB 3.1 may be achieved. In case of performing USB power supply, the amount of power used varies depending on the distance of the effective communication range of the receiver, and the USB interface may therefore be selected in accordance with the required amount of power. When the computer body is a compact tablet computer, etc., a USB cable for a micro-B connector may be used as the connector is small. When the desired amount of power cannot be obtained from the USB interface of the computer body, the computer body may be connected to the AC power through an AC power adapter, instead of driving the computer body via batteries, to supply power from the antenna signal acquisition unit.

The other configurations are similar to those of Embodiment 1 in Fig. 2 and the description thereof will therefore be omitted.

### <Embodiment 7: Functions - Hardware Configurations (Computer Body)>

The hardware configurations are similar to those of Embodiment 1 in Fig. 4 and the description thereof will therefore be omitted.

### <Embodiment 7: Processing Flow>

The processing flow in the receiver and the computer body is similar to that of Embodiment 1 in Fig. 5 and the description thereof will therefore be omitted.

As described above, according to Embodiment 7, in addition to the advantages of Embodiments 1 to 6, the computer body and the receiver externally connected to the computer body are connected to each other by a USB cable and the power is fed from the computer body to the receiver, and thus a power supply for the receiver may be dispensed with.

### <Embodiment 8>

### <Outline>

Embodiment 8 is a computer lock system that is based on any of Embodiments 1 to 7 and that has a feature in part thereof. The feature of Embodiment 8 lies in the point that the antenna signal receiving unit of the receiver is configured to receive signals from an RFID without a power supply.

### <Embodiment 8: Configurations>

As shown in Fig. 17, the computer lock system according to Embodiment 8 comprises the computer body 1700 and the receiver 1710. The receiver 1710 comprises the antenna signal receiving unit 1711 and the antenna signal outputting unit 1712. The computer body 1700 includes the antenna signal acquisition unit 1701, the determination unit 1702, the accessible status information holding unit 1703, the access-enabling unit 1704, the access-disabling unit 1705 and the control unit 1706. The antenna signal receiving unit 1711 of the receiver 1710 is configured to receive signals from an RFID 1713 without a power supply.

### <Embodiment 8: Description of Configurations>

The antenna signal receiving unit 1711 of the receiver 1710 is configured to receive signals from the RFID 1713 without a power supply. Here, the RFID 1713 without a power supply may be in any shape, such as a card type, a wireless tag, etc. For example, it may be a card type for employees or may be a small device like a wireless tag. If the effective communication range of the RFID 1713 without a power supply and the receiver 1710 is set to approximately one meter, crosstalk with other receivers may be prevented even if a plurality of computer bodies are installed next to each other. It should be noted that the receiving antenna is preferably an antenna with directionality. The high-sensitivity direction of the antenna is preferably directed toward the seat of the user operating the computer body.

The other configurations are similar to those of Embodiment 1 in Fig. 2 and the description thereof will therefore be omitted.

### <Embodiment 8: Functions - Hardware Configurations (Computer Body)>

The hardware configurations are similar to those of Embodiment 1 in Fig. 4 and the description thereof will therefore be omitted.

### <Embodiment 8: Processing Flow>

The processing flow in the receiver and the computer body is similar to that of Embodiment 1 in Fig. 5 and a detailed description thereof will therefore be omitted, and the gist of Embodiment 8 will be described. For example, if an RFID without a power supply, like a card-type employee ID card, or a compact RFID without a power supply, like a wireless tag, is worn around the neck of a user or placed in a pocket of his/her clothing, the computer is automatically locked when the user leaves his/her seat partway through working on the computer and goes out of the effective communication range, and the computer is then automatically unlocked when the user approaches or returns to his/her seat; namely, when the user enters the effective communication range. This effective communication range is preferably a range where the distance from the computer body to which the receiver is externally connected is, for example, approximately one meter.

As described above, according to Embodiment 8, in addition to the advantages of Embodiments 1 to 7, if an RFID without a power supply, like a card-type employee ID card, or a compact RFID without a power supply, like a wireless tag, is worn around the neck of a user or placed in a pocket of his/her clothing, the computer is automatically locked when the user leaves his/her seat partway through working on the computer and goes beyond the effective communication range, and the computer is then automatically unlocked when the user approaches his/her seat and enters the effective communication range. For example, the computer may be unlocked if the distance between the user and the computer body is approximately one meter.

### <Embodiment 9>

### <Outline>

Embodiment 9 is a computer lock system that is based on any of Embodiments 1 to 8 and that has a feature in part thereof.

As shown in Fig. 18, a computer (system) 1800 configured by the computer body, the receiver externally connected to the computer body, the display, etc. is connected to a computer 1802 having a configuration similar to that of the computer 1800 via a network (including a wired LAN, a wireless LAN, a mobile network, a cloud network, the Internet, broadband, etc.) 1801, and the feature of Embodiment 9 lies in the point that the computer body has a network connection-enabled function.

### <Embodiment 9: Configurations>

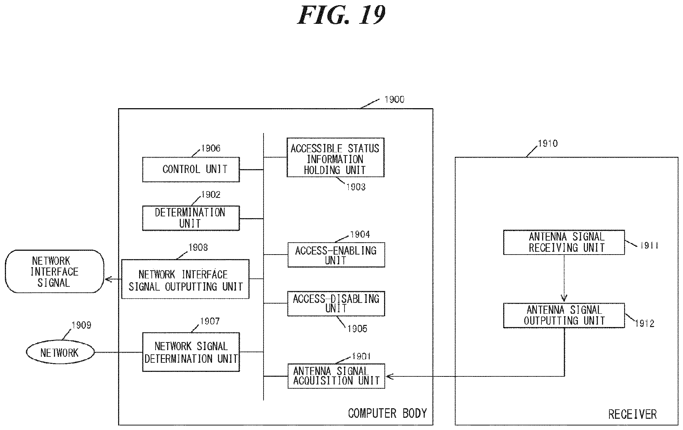

As shown in Fig. 19, the computer lock system according to Embodiment 9 comprises the computer body 1900 and the receiver 1910. The receiver 1910 comprises the antenna signal receiving unit 1911 and the antenna signal outputting unit 1913. The computer body 1900 includes the antenna signal acquisition unit 1901, the determination unit 1902, the accessible status information holding unit 1903, the access-enabling unit 1904, the access-disabling unit 1905 and the control unit 1906, and further includes a network signal determination unit 1907 and a network interface signal outputting unit 1908.

### <Embodiment 9: Description of Configurations>

### <Embodiment 9: Network Signal Determination Unit>

The network signal determination unit 1907 determines, in an intermittent manner, whether the unlock ID, which is an ID for enabling usual access to the display interface of the computer body 1900, is contained in the signal received via the network (including a wired LAN, a wireless LAN, a mobile network, a cloud network, the Internet, broadband, etc.). The received signal is the acquired signal, which is either: a signal containing the antenna signal from the antenna signal acquisition unit of the computer (see the right figure in Fig. 18) that is connected via the network; or a signal not containing the antenna signal from such antenna signal acquisition unit. Here, the interval of the intermittent determining operation is set to any time between a few seconds and a few dozen seconds for usual work. This achieves a remote desktop computer in which, when it is determined by the network signal determination unit 1907 that an authentic unlock ID has been sent through the network 1909 to the computer body 1900 from the computer connected via the network 1909, the usual access to the display interface of the computer body 1900 is enabled even when the computer is locked.

Namely, the computer body 1900 transmits and passes the acquired signal to other computer bodies connected to the network 1909.

### <Embodiment 9: Network Interface Signal Outputting Unit>

When the network signal determination unit 1907 determines that the unlock ID is contained, the network interface signal outputting unit 1908 transmits, to the computer connected via the network (see the left figure in Fig. 18), an interface signal indicating that the interface(s) of the computer body is (are) in the usual accessible state. The usual access to the display interface by the connected computer that received the interface signal via the network is now enabled, and thus a remote desktop computer is achieved. When the unlock ID is not contained, the locked state is continued if the computer has been locked.

### <Embodiment 9: Hardware Configurations (Computer Body)>

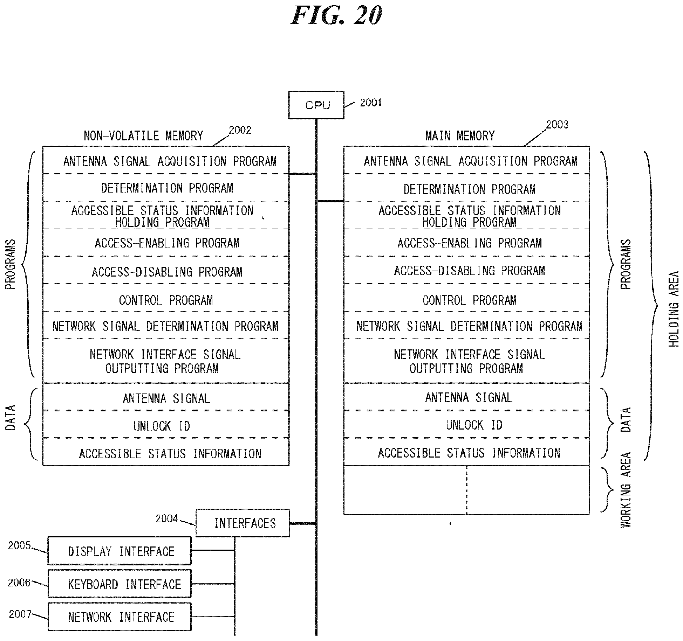

As shown in Fig. 20, the computing section of the computer body is configured by: the CPU 2001; the non-volatile memory 2002, such as an HDD, ROM, etc.; the main memory 2003, such as D-RAM, etc.; the interface 2004; the display interface 2005; the keyboard interface 2006 and the network interface 2007. The non-volatile memory 2002 stores therein programs, such as a network signal determination program, a network interface signal outputting program, etc. Data includes the antenna signal, the unlock ID, the accessible status information, etc. These programs and data are loaded to the holding area and executed in the working area of the main memory 2003. The other programs are similarly configured to those of Embodiment 1 in Fig. 4 and the description thereof will therefore be omitted.

### <Embodiment 9: Processing Flow - Computer Body>

As shown in Fig. 16, the above-described computing section of the computer body performs a step (step 2101) of determining a signal received via the network, by the network signal determination program, in order to determine, in an intermittent manner, whether the unlock ID, which is an ID for enabling the usual access to the display interface of the computer body, is contained in the signal received via the network. The received signal is the acquired signal, which is either: a signal containing the antenna signal from the antenna signal acquisition unit of the computer that is connected via the network; or a signal not containing the antenna signal from such antenna signal acquisition unit.

Next, the determination program performs a determining step (step 2102) in order to determine, in an intermittent manner, whether the unlock ID, which is an ID for enabling the usual access to the display interface of the computer body, is contained in the acquired signal. The acquired signal is either a signal containing the antenna signal from the step 2101 or a signal not containing the antenna signal from the step 2101.

After this, when the determining step 2102 determines that a valid unlock ID is contained, the access-enabling program performs the access-enabling step (step 2103) of changing the accessible status information of the accessible status information holding unit to the accessible status for enabling the usual access to the display interface of the computer body.

Following this, when the determining step 2102 determines that a valid unlock ID is not contained, the access-disabling step (step 2104) is performed, wherein the accessible status information in the accessible status information holding unit is changed to the inaccessible status for causing the display interface of the computer body 2100 to disable the usual access to the display.

Next, the control program performs the controlling step (step 2105) of controlling the display interface based on the accessible status held in the accessible status information holding unit.

When the network signal determination unit 1907 determines that the unlock ID is contained, the network interface signal outputting unit 1908 performs a step (step 2106) of outputting an interface signal via the network for transmitting, to the above-described connected computer via the network, such interface signal that indicates that the interface(s) of the computer body is(are) in the usual accessible state.

If the use of the computer by the user is not terminated (step 2107), the above-described processing is repeated from the network signal determination step 2101. If the use of the computer is terminated (step 2107), for example, when the computer is turned off, the processing is terminated.

When the computer is turned on again, the computer lock system is activated, and the lock state and the unlock state are automatically controlled based on the unlock ID assigned to the corresponding computer and the user status information without requiring any user operations.

As described above, according to Embodiment 9, in addition to the advantages of Embodiments 1 to 8, the computer body is enabled for network connection and the locking and unlocking control by means of remote computer connection is therefore achieved.

As described above, according to Embodiments 1 to 9, a computer lock system can be provided which comprises a computer body and a receiver externally connected to the computer body and which maintains security even when the receiver is detached.

## Claims

1. A computer lock system comprising a computer body and a receiver externally connected to the computer body, wherein
the receiver includes:
an antenna signal receiving unit that receives, in a wireless manner, an antenna signal that may include noise and be in a no-signal state; and
an antenna signal outputting unit that outputs the received antenna signal to the computer body, and wherein
the computer body includes:
an antenna signal acquisition unit that acquires the antenna signal output from the antenna signal outputting unit;
a determination unit that determines, in an intermittent manner, whether an unlock ID, which is an ID for enabling usual access to a display interface of the computer body, is contained in an acquired signal, the acquired signal being either a signal containing the antenna signal from the antenna signal acquisition unit or a signal not containing the antenna signal from the antenna signal acquisition unit;
an accessible status information holding unit that holds accessible status information that indicates whether or not the usual access to the display interface of the computer body is enabled, the indication being determined based on the acquired signal;
an access-enabling unit that changes, when the determination unit determines that a valid unlock ID is contained, the accessible status information in the accessible status information holding unit to an accessible status for enabling the usual access to the display interface of the computer body;
an access-disabling unit that changes, when the determination unit determines that a valid unlock ID is not contained, the accessible status information in the accessible status information holding unit to an inaccessible status for causing the display interface of the computer body to disable the usual access to a display; and
a control unit that controls the display interface based on the accessible status information held in the accessible status information holding unit.

2. The computer lock system according to claim 1, wherein
the antenna signal acquisition unit, the determination unit, the accessible status information holding unit, the access-enabling unit, the access-disabling unit and the control unit of the computer body are configured to be operative whenever a computer is in operation.

3. The computer lock system according to claim 1 or 2, wherein
the antenna signal receiving unit and the antenna signal outputting unit of the receiver are configured to be operative whenever the receiver is externally connected to the computer body that is in operation.

4. The computer lock system according to any one of claims 1 to 3, wherein
the computer body further includes:
a screen saver unit that displays and outputs a screen saver screen when no input is made from an interface for a predetermined period of time; and
a conflict coordinating unit that gives priority to an operation of the control unit when the operation of the control unit and an operation of the screen saver unit conflict with each other.

5. The computer lock system according to any one of claims 1 to 4, further including:
a password entry accepting unit that accepts an entry of a password, when the determination unit determines that the valid unlock ID is not contained and when the display interface of the computer body is being disabled of the usual access to the display;
a password determination unit that determines whether or not the password is correct; and
an accessible status fixing unit that forcibly fixes the accessible status information in the accessible status information holding unit to the accessible status when the password determination unit determines that the password is correct.

6. The computer lock system according to claim 5, further including:
an inactivation unit that inactivates, when the accessible status information is fixed to the accessible status by the accessible status fixing unit, functions in order to prevent the display interface of the computer body from disabling the usual access to the display by means of the antenna signal acquisition unit, the determination unit and the access-disabling unit of the computer body.

7. The computer lock system according to any one of claims 1 to 6, wherein
the computer body and the receiver externally connected to the computer body are connected to each other via a USB cable, the antenna signal outputting unit of the receiver and the antenna signal acquisition unit of the computer body exchange signals by the USB cable, and the receiver is power-fed through the USB cable.

8. The computer lock system according to any one of claims 1 to 7, wherein
the antenna signal receiving unit of the receiver is configured to receive a signal from an RFID without a power supply.

9. The computer lock system according to any one of claims 1 to 8, wherein
the computer body includes:
a network signal determination unit that determines, in an intermittent manner, whether the unlock ID, which is an ID for enabling the usual access to the display interface of the computer body, is contained in a signal received via a network, the received signal being an acquired signal, the acquired signal being either a signal containing an antenna signal from an antenna signal acquisition unit of a connected computer connected via the network or a signal not containing the antenna signal from the antenna signal acquisition unit; and
a network interface signal outputting unit that transmits an interface signal that indicates that the interface of the computer body is in the usual accessible state to the connected computer via the network, when the network signal determination unit determines that the unlock ID is contained.

10. A computer body comprising the computer lock system according to any one of claims 1 to 9.

11. A method for operating a computer body of a computer lock system comprising the computer body and a receiver externally connected to the computer body, wherein
the receiver includes:
an antenna signal receiving unit that receives, in a wireless manner, an antenna signal that may include noise and be in a no-signal state; and
an antenna signal outputting unit that outputs the received antenna signal to the computer body, and wherein
the computer body is caused to perform:
an antenna signal acquisition step of acquiring the antenna signal output from the antenna signal outputting unit;
a determination step of determining, in an intermittent manner, whether an unlock ID, which is an ID for enabling usual access to a display interface of the computer body, is contained in an acquired signal, the acquired signal being either a signal containing the antenna signal from the antenna signal acquisition step or a signal not containing the antenna signal from the antenna signal acquisition step;
an accessible status information holding step of holding, at all times, accessible status information that indicates whether or not the usual access to the display interface of the computer body is enabled, the indication being determined based on the acquired signal;
an access-enabling step of changing, when the determination step determines that a valid unlock ID is contained, the accessible status information in an accessible status information holding step to an accessible status for enabling the usual access to the display interface of the computer body;
an access-disabling step of changing, when the determination step determines that a valid unlock ID is not contained, the accessible status information in the accessible status information holding step to an inaccessible status for causing the display interface of the computer body to disable the usual access to a display; and
a controlling step of controlling the display interface based on the accessible status information held in the accessible status information holding step.

12. A program for operating a computer body of a computer lock system comprising the computer body and a receiver externally connected to the computer body, wherein
the receiver includes:
an antenna signal receiving unit that receives, in a wireless manner, an antenna signal that may include noise and be in a no-signal state; and
an antenna signal outputting unit that outputs the received antenna signal to the computer body, and wherein
the computer body is caused to perform:
an antenna signal acquisition step of acquiring the antenna signal output from the antenna signal outputting unit;
a determination step of determining, in an intermittent manner, whether an unlock ID, which is an ID for enabling usual access to a display interface of the computer body, is contained in an acquired signal, the acquired signal being either a signal containing the antenna signal from the antenna signal acquisition step or a signal not containing the antenna signal from the antenna signal acquisition step;
an accessible status information holding step of holding, at all times, accessible status information that indicates whether or not the usual access to the display interface of the computer body is enabled, the indication being determined based on the acquired signal;
an access-enabling step of changing, when the determination step determines that a valid unlock ID is contained, the accessible status information in an accessible status information holding step to an accessible status for enabling the usual access to the display interface of the computer body;
an access-disabling step of changing, when the determination step determines that a valid unlock ID is not contained, the accessible status information in the accessible status information holding step to an inaccessible status for causing the display interface of the computer body to disable the usual access to a display; and
a controlling step of controlling the display interface based on the accessible status information held in the accessible status information holding step.
